Europäisches Patentamt

European Patent Office

Office européen des brevets

(19)

(11) Veröffentlichungsnummer : **0 036 127**
**B1**

(12) **EUROPÄISCHE PATENTSCHRIFT**

(45) Veröffentlichungstag der Patentschrift :
**15.08.84**

(21) Anmeldenummer : **81101529.6**

(22) Anmeldetag : **04.03.81**

(51) Int. Cl.³ : **C 08 L 69/00**

(54) **Polycarbonate mit verbesserter Schlagzähigkeit.**

(30) Priorität : **14.03.80 US 130288**

(43) Veröffentlichungstag der Anmeldung :
**23.09.81 Patentblatt 81/38**

(45) Bekanntmachung des Hinweises auf die Patenterteilung : **15.08.84 Patentblatt 84/33**

(84) Benannte Vertragsstaaten :
**DE FR GB IT NL SE**

(56) Entgegenhaltungen :
**FR-A- 2 167 650**
**US-E-    28 723**
**Die Akte enthält technische Angaben, die nach dem
Eingang der Anmeldung eingereicht wurden und die
nicht in dieser Patentschrift enthalten sind.**

(73) Patentinhaber : **Mobay Chemical Corporation
Penn Lincoln Parkway West
Pittsburgh, Pennsylvania 15205 (US)**

(72) Erfinder : **Witman, Mark W.
22 Orchard Drive
New Martinsville West Virginia 26155 (US)**

(74) Vertreter : **Gremm, Joachim, Dr. et al
Bayer AG c/o Zentralbereich Patente, Marken und
Lizenzen
D-5090 Leverkusen 1, Bayerwerk (DE)**

## Beschreibung

Die Erfindung betrifft Polycarbonate, insbesondere Polycarbonate mit verbesserter Schlagzähigkeit.

Polycarbonate, die aus Reaktionen erhalten werden, an denen organische Dihydroxyverbindungen und Kohlensäurederivate beteiligt sind, haben auf Grund ihrer ausgezeichneten mechanischen und physikalischen Eigenschaften weitgehende technische Anwendungen gefunden. Diese thermoplastischen Polymerisate eignen sich besonders gut für die Herstellung von Formteilen, bei denen es auf Schlagzähigkeit, Steifigkeit, Zähigkeit, thermische Stabilität und Maßhaltigkeit sowie ausgezeichnete elektrische Eigenschaften ankommt.

Polycarbonate weisen bekanntlich hohe Izod-Kerbschlagzähigkeitswerte auf (ASTM D-256). Diese Werte von etwa 8,54 J/cm (16 ft-lbs/in.) in Verbindung mit dem Reißen durch Verformungsbruch sind charakteristisch für Prüfkörper, die dünner als etwa 3,2 mm (1,8 Zoll) sind. Dickere Prüfkörper, d. h. mit einer Dicke von 6,35 mm (1,4 Zoll), reißen durch Sprödbruch bei etwa 1,33 J/cm (2,5 ft-lbs/in.).

Die Abhängigkeit der Schlagzähigkeit von der Dicke führt zu dem Begriff der « kritischen Dicke », einem Werkstoffparameter, der als die Dicke definiert wird, bei der in der graphischen Darstellung der Schlagzähigkeit in Abhängigkeit von der Probendicke eine Unterbrechung auftritt. Beispielsweise zeigt Polycarbonat auf Basis von Bisphenol A mit einer Schmelzflußrate von 3 bis 6 g/10 Min. bei 300 °C (ASTM D-1238) eine Unterbrechung bei etwa 5,71 mm (225 mil). Formteile aus diesem Material, die dünner sind als 5,71 mm, reißen beim Aufschlag durch Verformungsbruch, während dickere Formteile durch Sprödbruch reißen.

Diese Abhängigkeit der Schlagzähigkeit von der Dicke stellt einen Nachteil dar, weil sie die Eignung von Polycarbonaten dadurch zu begrenzen pflegt, daß sie der Dimensionierung und Formgestaltung von Formteilen Begrenzungen auferlegt.

Ein Weg zur Lösung des Problems der kritischen Dicke ist die Einarbeitung von Polyolefinen in Polycarbonatharze (siehe US-PS 3 437 631). Eine andere Lösung, die in der US-PS 4 043 980 beschrieben wird, ist die Einführung von schwefelhaltigen aromatischen Diolen in die Polycarbonatkette. Keine dieser Lösungen ist völlig befriedigend, da sie einen Kompromiss mit gewissen anderen wichtigen Eigenschaften von Polycarbonatharzen darstellen. Acrylkautschuk-Verbundinterpolymere (acrylic rubber interpolymer composites) wurden als schlagzähigkeitsmodifizierende Mittel für gewisse thermoplastische Materialien vorgeschlagen. Diese mehrphasigen Verbindungen werden in der US-PS 3 808 180 als Schlagzähigkeitsverbesserer für Vinylhalogenide und Acrylpolymerisate und in der US-PS 4 096 202 als modifizierende Mittel für Polyalkylenterephthalate beschrieben.

Die Erfindung stellt sich die Aufgabe, Polycarbonate mit verbesserter Schlagzähigkeit verfügbar zu machen. Eine weitere Aufgabe ist die Schaffung eines Verfahrens, das diese Verbesserung ohne wesentliche Beeinträchtigung der anderen Eigenschaften der Polycarbonate ermöglicht. Diese Aufgaben werden durch die Erfindung gelöst, die eine Harzmasse betrifft in Form eines Gemisches von 80 bis 99 Gew.-% eines aromatischen thermoplastischen Polycarbonatharzes und 1 bis 20 Gew.-% eines mehrphasigen Verbund-Interpolymeren, das die folgenden Bestandteile enthält :

a) 25 bis 95 Gew.-% einer ersten elastomeren Phase, die aus einem 75 bis 99,8 Gew.-% n-Butylacrylat, 0,1 bis 5 Gew.-% 1,3-Butylendiacrylat und 0,1 bis 5 Gew.-% Diallylmaleat enthaltenden System polymerisiert worden ist, und

b) 75 bis 5 % einer zweiten starren thermoplastischen Phase, die aus Methylmethacrylat in Gegenwart der elastomeren Phase polymerisiert worden ist.

Durch die Zumischung des Acrylkautschuk-Interpolymeren wird auch die Schlagzähigkeit von Polycarbonat-Formmassen verbessert, die feuerhemmende Zusätze und Entformungsmittel enthalten.

Der hier gebrauchte Ausdruck « Polycarbonatharz » bedeutet das reine Harz ohne Zusatzstoffe ; « Polycarbonat » bedeutet das Polycarbonatharz mit darin eingearbeiteten Zusätzen. Die Polycarbonatharze gem. der Erfindung können nach üblichen Verfahren der Herstellung von Polycarbonatharzen hergestellt und ein Gewichtsmittelmolekulargewicht von 10 000 bis 200 000 und vorzugsweise eine Schmelzflußrate von 1 bis 24 g/10 Min. bei 300 °C (ASTM D-1238) haben.

Beliebige geeignete Verfahren, Reaktionsteilnehmer, Katalysatoren, Lösungsmittel, Bedingungen u. dgl., die üblicherweise für Polycarbonatharzsynthesen dienen, können für die Herstellung der Polycarbonatharze gemäß der Erfindung angewandt werden, wie sie beispielsweise in den DE-PSen 1 046 311 und 962 274 und in den US-PSen 3 248 414, 3 153 008, 3 215 668, 3 187 065, 3 028 365, 2 999 846 und 2 999 835 beschrieben werden. Das bevorzugte Verfahren ist das Grenzflächen-Polykondensationsverfahren.

Beim Grenzflächen-Polykondensationsverfahren werden Polycarbonatharze hergestellt, indem die aromatischen Dihydroxyverbindungen mit einem Alkalihydroxid oder Erdalkalioxid oder -hydroxid umgesetzt werden, wobei das Salz der Hydroxyverbindungen gebildet wird. Das Salzgemisch liegt in wäßriger Lösung oder Suspension vor und wird mit Phosgen, Carbonylbromid oder Bischlorameisensäureestern der aromatischen Dihydroxyverbindungen umgesetzt. Im Reaktionsgemisch wird ein organisches Lösungmittel verwendet, das ein Lösungsmittel für das Polymerisat, aber nicht für die aromatischen Dihydroxysalze ist. Beispielsweise werden chlorierte aliphatische Kohlenwasserstoffe oder chlorierte aromatische Kohlenwasserstoffe als organisches Lösungsmittel verwendet, das das Kondensationsprodukt löst. Zur Begrenzung des Molekulargewichts können monofunktionelle Reaktionsteilnehmer wie Monophenole, z. B. die Propyl-, Isopropyl- und Butyl-phenole, insbesondere p-t-Butylphenol und Phenol selbst, verwendet werden. Zur Beschleunigung der Reaktion können Katalysatoren, z. B. tertiäre Amine, quaternäre Ammonium-, Phosphonium- oder Arsoniumsalze u. dgl. verwendet werden. Die Reaktionstemperatur sollte etwa − 20° bis + 150 °C, vorzugsweise 0° bis etwa 100 °C betragen.

Beim Polykondensationsverfahren in der homogenen Phase werden die gelösten Reaktionskomponenten in einem inerten Lösungsmittel in Gegenwart einer äquivalenten Menge einer zur Absorption der gebildeten HCl erforderlichen tertiären Aminbase, z. B. N,N-Dimethylanilin, N,N-Dimethylcyclohexylamin oder vorzugsweise Pyridin, polykondensiert. Bei einem anderen Verfahren können Diarylcarbonate mit den aromatischen Dihydroxyverbindungen umgeestert werden, wobei das Polycarbonatharz gebildet wird.

Es ist zu bemerken, daß es möglich ist, bei den vorstehend beschriebenen Verfahren in chemisch sinnvoller Weise sowohl die aromatischen Dihydroxyverbindungen als auch die Monohydroxyverbindungen in Form der Alkalisalze und/oder Bishalogenameisensäureester und die Phosgen- oder Carbonylbromidmenge, die dann noch erforderlich ist, um hochmolekulare Produkte zu erhalten, zu kombinieren. Andere Syntheseverfahren zur Herstellung der Polycarbonate gemäß der Erfindung, wie sie in der US-PS 3 912 688 beschrieben sind, können ebenfalls angewandt werden.

Die aromatischen Polycarbonate können verzweigt werden, indem Verbindungen, die trifunktionell oder mehr als trifunktionell sind, insbesondere solche mit drei oder mehr phenolischen Hydroxylgruppen, in geringen Mengen, d. h. zwischen 0,05 und 2,0 Mol-% (bezogen auf die Menge der Diphenole), eingearbeitet werden.

Polycarbonate dieses Typs werden beispielsweise in den DE-OSen 1 570 533, 1 595 762, 2 116 974, 2 113 347 und 2 500 092, in der GB-PS 1 079 821 und in der US-PS 3 511 514 beschrieben.

Beispiele einiger Verbindungen, die drei oder mehr phenolische Hydroxylgruppen enthalten und verwendet werden können, sind Phloroglucin, 4,4-Dimethyl-2,4,6-tri-(4-hydroxyphenyl)-hept-2-an, ·4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-äthan, Tri-(4-hydroxyphenyl)-phenylmethan, 2,2-Bis-[4,4-bis-(4-hydroxyphenyl)-cyclohexyl] . propan, 2,4-Bis-(4-hydroxyphenylisopropyl)-phenyl-2,6-bis-(2-hydroxy-5′-methyl-benzyl)-4-methylphenol, 2-(4-Hydroxyphenyl)-2-(2,4-dihydroxyphenyl)-propan und 1,4-Bis-(4,4″-dihydroxy-triphenylmethyl)-benzol. Weitere geeignete trifunktionelle Verbindungen sind 2-4-Dihydroxybenzoesäure, Trimesinsäure, Cyanursäurechlorid, 3,3-Bis-(4-hydroxyphenyl)-2-oxo-2,3-dihydroindol und 3,3-Bis-(3-methyl-4-hydroxyphenyl)-2-oxo-2,3-dihydroindol.

Acrylkautschuk-Verbund-Interpolymere werden in den US-PSen 3 808 180 und 4 096 202 beschrieben. Kurz gesagt, die darin beschriebene Technik ist die der Herstellung einer bestimmten Klasse von mehrphasigen Verbindungen. Hierbei handelt es sich um Zusammensetzungen, die etwa 25 bis 95 Gew.-% einer ersten elastomeren Phase und etwa 75 bis 5 Gew.-% einer zweiten, starren, thermoplastischen Phase enthalten. Die erste Phase wird aus etwa 75 bis 99,8 Gew.-% $C_1$-$C_6$-Acrylat polymerisiert, wobei ein Acrylkautschukkern gebildet wird, der eine Einfriertemperatur unter etwa 10 °C hat und mit 0,1 bis 5 Gew.-% eines vernetzenden Monomeren vernetzt ist, und an den 0,1 bis 5 Gew.-% eines pfropfenden Monomeren angelagert sind.

Das monomere System der zweiten Phase kann aus Methacrylat, Styrol oder Alkylacrylat bestehen. Als Alkylacrylat wird Butylacrylat bevorzugt. Das vernetzende Monomere ist ein polyäthylenisch ungesättigtes Monomeres, das mehrere additionspolymerisierbare reaktionsfähige Gruppen enthält, die sämtlich bei im wesentlichen der gleichen Reaktionsgeschwindigkeit polymerisieren. Beispiele geeigneter vernetzender Monomerer sind Polyacrylsäure- und Polymethacrylsäureester von Polyolen, z. B. Butylendiacrylat und -dimethacrylat, Trimethylolpropantrimethacrylat u. dgl., Di- und Trivinylbenzol, Vinylacrylat und -methacrylat u. dgl. Bevorzugt als vernetzendes Monomeres wird Butylendiacrylat. Das pfropfende Monomere ist ein polyäthylenisch ungesättigtes Monomeres mit mehreren additionspolymerisierbaren reaktionsfähigen Gruppen, von denen wenigstens eine bei einer Polymerisationsgeschwindigkeit polymerisiert, die von derjenigen wenigstens einer anderen dieser reaktionsfähigen Gruppen wesentlich verschieden ist. Das pfropfende Monomere hat die Aufgabe, für einen restlichen Grad an Ungesättigtheit in der elastomeren Phase, insbesondere in den letzteren Phasen der Polymerisation und demzufolge an oder in der Nähe der Oberfläche der Elastomerteilchen, Sorge zu tragen.

Bevorzugt als vernetzende Monomere werden Alkylacrylate und Dialkylmaleate.

Es wurde gefunden, daß ein bestimmtes Acrylkautschuk-Verbundinterpolymeres, das dadurch gekennzeichnet ist, daß es n-Butylacrylat als Acrylkautschukkern, 1,3-Butylen-diacrylat als Vernetzungsmittel, Diallylmaleat als pfropfendes Monomeres und Methylmethacrylat als monomeres System der zweiten Phase enthält, einen überraschenden und tiefgreifenden Einfluß auf die Schlagzähigkeitseigenschaften der Polycarbonatharze hat. Eine erhebliche Verbesserung der Schlagzähigkeit, erkennbar an einer Zunahme der kritischen Dicke, die ein Zeichen für eine günstige Verschiebung im Übergangsbereich vom Verformungsbruch zum Sprödbruch ist, wird gemäß der Erfindung erzielt, indem das Polycarbonatharz mit verhältnismäßig geringen Mengen einer Acrylkautschuk-Interpolymerverbindung gemischt wird.

Von Interesse sind auch die Schlagzähigkeitseigenschaften dieser Gemische bei tiefen Temperaturen. Beim Pfeilfallversuch bei − 29 °C rissen nicht modifizierte Polycarbonate durch Sprödbruch, während die Gemische, die die Acrylkautschuk-Interpolymerverbindung enthielten, durch Verformungsbruch rissen.

In Gemische von Polycarbonaten und der Acrylkautschuk-Interpolymerverbindung wurden Flammschutzmittel, Entformungsmittel (Polycaprolacton mit einer reduzierten Viskosität von 0,7, Triglyceride, Pentaerythrittetrastearat und Ester von dreiwertigen Alkoholen und gesättigter aliphatischer Carbonsäure) und UV-Stabilisatoren (Benzotriazol) eingearbeitet. Die Erfindung wird durch die folgenden Beispiele weiter erläutert.

Beispiele 1 bis 4

Ein Polycarbonatharz auf Basis von Bisphenol A in Granulatform mit einer Schmelzflußrate von 3,5[2] und einem Zahlenmittelmolekulargewicht von 36 000 wurde mit einer Acrylkautschuk-Interpolymerverbindung gemischt und zu Prüfkörpern gepreßt. Die Interpolymerverbindunb hatte die folgende Zusammensetzung, ausgedrückt in Gewichtsverhältnissen der sie bildenden Monomeren : n-Butylacrylat/1,3-Butyldiacrylat/Diallylmaleat/Methylmethacrylat = 79,2/0,4/0,4/20,0[4]. Die Ergebnisse der Prüfungen sind in Tabelle I genannt.

Tabelle I

| | Poly-carbonat-harz (Kontrolle) | Polycarbonate [1] Teile pro 100 Teile Harz | | |
|---|---|---|---|---|
| | | 5 | 10 | 15 |
| Izod−Kerbschlag-zähigkeit | | | | |
| 3,2 mm-Probe, J/cm | 9,26 | 8,83 | 8,28 | 8,16 |
| (ft.-lbs/in.) | (17,34) | (16,54) | (15,51) | (15,28) |
| 6,35 mm-Probe, J/cm | 1,61 | 7,87 | 6,97 | 6,27 |
| (ft.-lbs/in.) | (3,02) | (14,74) | (13,05) | (11,74) |
| Kritisch-e Dicke, mm | 5,21 | >6,68 | >6,73 | >6,63 |
| (mils) | (205) | (>263) | (>265) | (>261) |
| Schmelzflußrate[2] | | | | |
| g/10 Min. | 3,3 | 3,2 | 2,5 | 1,9 |
| Formbeständigkeit in der Wärme [3], °C | 136,7 | 138,3 | 132,9 | 132,8 |
| (°F) | (278,1) | (281,0) | (271,2) | (271,0) |
| Biegemodul, N/mm$^2$ | 2275 | 2117 | 2020 | 1931 |
| (psi x 10$^5$) | (3,30) | (3,07) | (2,93) | (2,80) |

[1] Polycarbonatharz in Mischung mit der gennanten Menge KM-330
[2] Schmelzflußrate bei 300 °C gemäß ASTM D-1238
[3] Formbeständigkeit in der Wärme bei 1,82 N/mm² (264 psi) gemäß ASTM D648
[4] KM-330, ein Produkt von Rohm & Hass Company, Philadelphia, Pa.

Beispiele 5 bis 11

Gemische von granuliertem Polycarbonatharz auf Basis von Bisphenol A mit einem Gewichtsmittelmolekulargewicht von 29 000 und einer Schmelzflußrate von 8 g/10 Minuten (gemäß ASTM D-1238) mit dem Produkt der Handelsbezeichnung KM-330 wurden hergestellt, gepreßt und geprüft, wie für die Beispiele 1 bis 4 beschrieben. Die Ergebnisse der Prüfungen dieser Polycarbonate sind in Tabelle II genannt.

(Siehe Tabelle II, Seite 5f.)

Tabelle II

| Teile pro 100 Teile Harz | Polycarbonate [1] | | | | | | |
|---|---|---|---|---|---|---|---|
| | Kontrolle | 1 | 2 | 3 | 4 | 5 | 10 |
| Izod-Kerbschlagzähigkeit | | | | | | | |
| 3,2 mm-Prüfkörper, J/cm | 8,17 | 8,14 | 8,11 | 7,71 | 7,85 | 7,85 | 7,68 |
| (ft-lbs/in) | (15,31) | (15,25) | (15,20) | (14,44) | (14,7) | (14,7) | (14,38) |
| 6,35 mm-Prüfkörper, J/cm | 1,05 | 1,28 | 2,56 | 6,83 | 7,04 | 6,65 | 5,61 |
| (ft-lbs/in.) | (1,96) | (2,39) | (4,80) | (12,8 ) | (13,18) | (12,46) | (10,5) |
| Kritische Dicke, mm | 4,2 | 4,5 | 5,9 | >6,35 | >6,35 | >6,35 | >6,35 |
| (mils) | (164) | (178) | (231) | (>250) | (>250) | (>250) | (>250) |
| Pfeilfallprüfung[2], J | 73,6 | 74,4 | 67,9 | 67,1 | 65,9 | 64,1 | 57 |
| (ft.lbs.) | (54,3 ) | (54,9) | (50,1) | (49,5) | (48,6) | (47,3) | (42,0) |
| Formbeständigkeit in der Wärme bei 1,82 N/mm$^2$, °C | 135,9 | 135,4 | 134,9 | 134 | 133 | 133 | 125,6 |
| (°F) | (276,6) | (275,7) | (274,8) | (273,2) | (271,4) | (271,4) | (258,1) |
| Biegemodul, N/mm$^2$ | 2482 | 2524 | 2441 | 2406 | 2379 | 2365 | 2179 |
| (psi 10$^5$) | | (3,60) | (3,66) | (3,54) | (3,49) | (3,45) | (3,43) | (3,16) |

[1] Polycarbonatharz in Mischung mit der angegebenen Menge des Produkts KM-330
[2] Pfeilfallprüfung gemäß ASTM D3029, modifiziert (konstantes Gewicht, veränderliche Höhe).

## Beispiel 12

Ein Gemisch von granuliertem Polycarbonatharz auf Basis von Bisphenol-A mit einer Schmelzflußrate von 3,5 (bei 300 °C gemäß ASTM D-1238) und 3 Teilen Acrylkautschuk-Interpolymerverbindung pro 100 Teile Harz wurde durch Spritzgießen verarbeitet. Verarbeitungstemperaturen von 343 °C (650 °F) im Verlauf des Spritzgießens beeinträchtigen das Aussehen oder die Eigenschaften dieser Produkte nicht nachteilig.

## Beispiel 13

Gemisch ähnlich den in Beispiel 2 beschriebenen wurden auf ihre thermische Stabilität untersucht. Messungen der Schmelzviskosität bei 300 °C nach 5, 35 und 65 Minuten lassen die gleiche Veränderung erkennen, wie sie bei ungemischtem Polycarbonatharz beobachtet wurde.

### Anspruch

Harzmasse in Form eines Gemisches von 80 bis 99 Gew.-% eines aromatischen thermoplastischen Polycarbonatharzes und 1 bis 20 Gew.-% eines mehrphasigen Verbund-Interpolymeren, das die folgenden bestandteile enthält :
a) 25 bis 95 Gew.-% einer ersten elastomeren Phase, die aus einem 75 bis 99,8 Gew.-% n-Butylacrylat, 0,1 bis 5 Gew.-% 1,3-Butylendiacrylat und 0,1 bis 5 Gew.-% Diallylmaleat enthaltenden System polymerisiert worden ist, und
b) 75 bis 5 % einer zweiten starren thermoplastischen Phase, die aus Methylmethacrylat in Gegenwart der elastomeren Phase polymerisiert worden ist.

### Claim

Resin composition in the form of a blend of 80 to 99 % by weight of an aromatic thermoplastic polycarbonate resin and 1 to 20 % by weight of a multiphase composite interpolymer containing the following constituents :
a) 25 to 95 % of a first elastomeric phase which has been polymerised from a system containing 75 to 99.8 % by weight of n-butyl acrylate, 0.1 to 5 % by weight of 1,3-butylene diacrylate and 0.1 to 5 % by weight of diallyl maleate, and
b) 75 to 5 % by weight of a second rigid thermoplastic phase which has been polymerised from methyl methacrylate in the presence of the elastomeric phase.

### Revendication

Masse de résine sous forme d'un mélange de 80 à 99 % en poids d'une résine de polycarbonate thermoplastique aromatique et 1 à 20 % en poids d'un interpolymère composite à plusieurs phases, qui contient les constituants suivants :
a) 25 à 95 % en poids d'une première phase élastomère, qui a été polymérisée à partir d'un système contenant 75 à 99,8 % en poids d'acrylate de n-butyle, 0,1 à 5 % en poids de maléate de diallyle, et
b) 75 à 5 % d'une seconde phase thermoplastique rigide qui a été polymérisée à partir de méthacrylate de méthyle en présence de la phase élastomère.